# EUROPEAN PATENT APPLICATION

(11) **EP 1 624 003 A1**
(43) Date of publication of application: **08.02.2006**
(21) Application number: 05016272.6
(22) Date of filing: 27.07.2005
(51) Int. Cl.: C08G 18/02, C08G 18/08, C08G 18/38, C08G 18/70, C08G 18/79, C09D 175/04

(54) **Process for producing cured coating film using a water soluble triazine crosslinking accelerator**

(30) Priority: 30.07.2004 JP 2004223373
(71) Applicant: Nisshinbo Industries, Inc., Tokyo (JP)
(72) Inventor: Takahashi, Ikuo, Midori-ku Chiba-shi Chiba (JP); Shoji, Tomoaki, Midori-ku Chiba-shi Chiba (JP)
(74) Representative: Leifert & Steffan

(57) **Abstract**

There is provided a process for producing a cured coating film by crosslinking an aqueous resin containing in a molecule thereof, a group capable of being converted into an active hydrogen-containing group by the action of a proton, with a crosslinking agent reactive with active hydrogen in the active hydrogen-containing group in the presence of a crosslinking accelerator made of a water-soluble triazine compound capable of generating a proton upon reacting with water. According to the present invention, a cured coating film having a sufficient strength can be produced for a short period of time.

## Description

### FIELD OF THE INVENTION

The present invention relates to a process for producing cured coating films, and more particularly to an industrially useful process for producing cured coating films having a sufficient strength for a short period of time, for example, by crosslinking an aqueous resin such as salt-type carboxyl group-containing urethane-based resins and acrylic resins with a crosslinking agent such as polycarbodiimide.

### BACKGROUND OF INVENTION

Aqueous resins such as water-soluble resins and water-dispersible resins have been extensively used in various applications such as paints, inks, fiber-treating agents, adhesives and coating agents.

In recent years, among these applications, in particular, the need for aqueous paints such as water-soluble or water-dispersible paints have become increased because these paints using water as a solvent or a dispersing medium and containing no organic solvent are free from environmental pollution or fire risk, and further coating equipments used therefor such as brushes, rollers and spray guns as well as stains of these paints are readily cleaned or washed out with water.

The aqueous resins generally contain carboxyl groups which are introduced thereinto in order to impart a good water solubility or a good water dispersibility to the resins themselves. Therefore, coating films produced from such aqueous resins tend to generate hydrolysis owing to residual carboxyl groups therein, and, as a result, tend to be deteriorated in strength, durability and appearance. The aqueous resins have such a structure that the carboxyl groups are bonded to and suspended from a basic polymer skeleton thereof as side chains. However, in order to stably keep the aqueous resins in an aqueous medium, these resins are generally formed into an alkali salt thereof. Upon formation of the alkali salt, those anions derived from volatile alkalis such as ammonium anion and triethyl ammonium anion are preferably used as a counter ion of the carboxyl group, since these anions are removed by volatilization simultaneously when a coating film produced from the aqueous resins is heat-treated. The aqueous resins which are in the form of a carboxylic acid salt with the counter ion can be stably dispersed in a micelle state in an aqueous medium.

However, since the counter ion is volatilized and removed from the aqueous resins upon formation of the coating film, the carboxylic acid salt is returned to a carboxylic acid. The carboxyl groups remaining in the aqueous resins tend to induce hydrolysis of the aqueous resins as described above, so that the resultant coating film tends to be deteriorated in water resistance.

On the other hand, for the purpose of imparting a good durability to the resultant coating film, there is known such a method in which a crosslinking agent such as polycarbodiimide is added to the aqueous resins to attain a crosslinking effect by reacting with the carboxyl groups. As the carbodiimide compounds usable as a crosslinking agent for aqueous resins, there is disclosed aqueous dicyclohexylmethane carbodiimide which exhibits a good reactivity and a good keeping property as well as a good handing property when used as such a crosslinking agent (for example, refer to Japanese Patent Application Laid-Open No. 2000-7642). The aqueous dicyclohexylmethane carbodiimide exhibits no toxicity and a sufficient pot life, but has the following problems when applied to the aqueous resins containing the above salt-type carboxyl groups.

That is, the crosslinking agent such as polycarbodiimide has a good reactivity with a carboxylic acid (-COOH group) but a poor reactivity with a carboxylic acid salt. Therefore, it is considered that substantially reaction between the crosslinking agent and the aqueous resins do not occur often until the counter ion such as ammonium anion and triethyl ammonium anion is volatilized and removed from the aqueous resins so that the carboxylic acid salt in the aqueous resins is returned to a carboxylic acid. This tends to cause such a disadvantage that the crosslinking reaction fails to proceed sufficiently within a period of such a heat treatment as conducted by ordinary users of paints for the purpose of drying a coating film.

### SUMMARY OF THE INVENTION

An object of the present invention is to provide an industrially useful process for producing cured coating films having a sufficient strength for a short period of time by using a crosslinking accelerator having an excellent crosslinking promoting effect upon crosslinking an aqueous resin containing in a molecule thereof a group capable of being converted into an active hydrogen-containing group by the action of a proton, with polycarbodiimide, etc., as well as a crosslinking accelerator used in the above process.

As a result of extensive researches in view of the above object, the inventors have found that a water-soluble triazine compound capable of generating a proton upon reacting with water is suitably used as such a crosslinking accelerator, and when the water-soluble triazine compound is used as the crosslinking accelerator upon production of a cured coating film by crosslinking an aqueous resin with a crosslinking agent such as polycarbodiimide, it is possible to produce a coating film having a sufficient strength for a short period of time. The present invention has been accomplished on the basis of the above finding.

Thus, the present invention provides:
(1) A process for producing a cured coating film, comprising:
   crosslinking an aqueous resin containing in a molecule thereof, a group capable of being converted into an active hydrogen-containing group by the action of a proton, with a crosslinking agent reactive with active hydrogen in the active hydrogen-containing group in the presence of a crosslinking accelerator made of a water-soluble triazine compound capable of generating a proton upon reacting with water.
(2) The process according to the above aspect (1), wherein said water-soluble triazine compound capable of generating a proton upon reacting with water is a compound represented by the general formula (I): 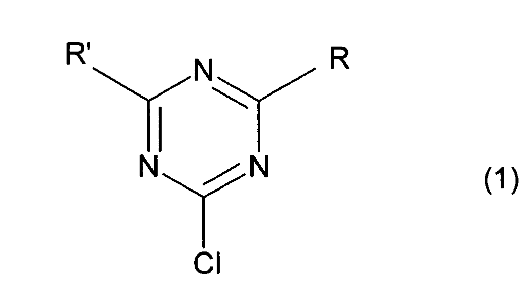
   wherein R is a group containing a hydrophilic group; R' is a chlorine atom or a group containing a hydrophilic group.
(3) The process according to the above aspect (2), wherein said group containing a hydrophilic group which is represented by R or R' in the general formula (I) is a sulfonic acid group, a hydroxyl group, an amino group, a salt of these groups, or a group containing a cyano group or an alkoxy group.
(4) The process according to the above aspect (2) or (3), wherein said group containing a hydrophilic group which is represented by R or R' in the general formula (I) is a group represented by the general formula (a) or (b): 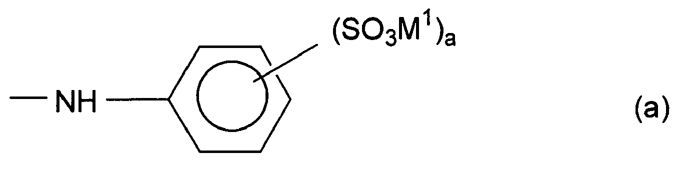 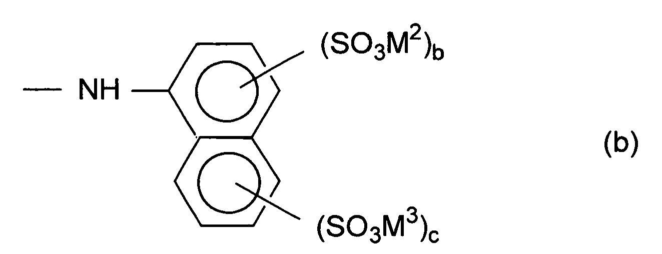
   wherein M¹ to M³ are respectively a hydrogen atom or alkali metal; a is an integer of 1 to 4; b is an integer of 1 to 3; and c is an integer of 1 to 4.
(5) The process according to any of the above aspects (1) to (4), wherein said crosslinking accelerator is used in an amount of 0.001 to 1 part by mass on the basis of 100 parts by mass of a solid content of the aqueous resin.
(6) The process according to any of the above aspects (1) to (5), comprising:
   preparing a coating solution in the form of an aqueous solution or an aqueous dispersion comprising (A) an aqueous resin containing, in a molecule thereof, a group capable of being converted into an active hydrogen-containing group by the action of a proton, (B) a crosslinking agent reactive with active hydrogen in the active hydrogen-containing group and (C) a crosslinking accelerator made of a water-soluble triazine compound capable of generating a proton upon reacting with water;
   applying the coating solution onto a substrate to form a coating layer thereon; and
   curing the coating layer under heating.
(7) The process according to any of the above aspects (1) to (6), wherein said aqueous resin containing, in a molecule thereof, a group capable of being converted into an active hydrogen-containing group by the action of a proton is a water-soluble or water-dispersible urethane-based resin or acrylic resin containing a salt-type carboxyl group.
(8) The process according to any of the above aspects (1) to (7), wherein said crosslinking agent reactive with active hydrogen in the active hydrogen-containing group is aqueous polycarbodiimide.
(9) The process according to the above aspect (8), wherein said aqueous polycarbodiimide is water-soluble or water-dispersible aqueous polycarbodiimide having an end hydrophilic group.
(10) A crosslinking accelerator comprising a water-soluble triazine compound capable of generating a proton upon reacting with water, which compound is represented by the general formula (I): 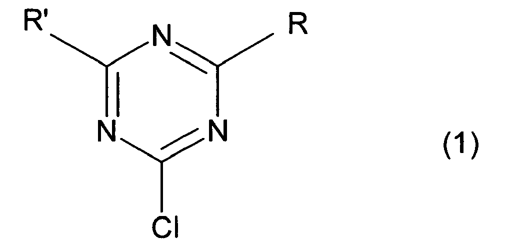
   wherein R is a group containing a hydrophilic group; R' is a chlorine atom or a group containing a hydrophilic group,
   said crosslinking accelerator being used for crosslinking an aqueous resin containing, in a molecule thereof, a group capable of being converted into an active hydrogen-containing group by the action of a proton.
(11) The crosslinking accelerator according to the above aspect (10), wherein said group containing a hydrophilic group which is represented by R or R' in the general formula (I) is a sulfonic acid group, a hydroxyl group, an amino group, a salt of these groups, or a group containing a cyano group or an alkoxy group.
(12) The crosslinking accelerator according to the above aspect (10) or (11), wherein said group containing a hydrophilic group which is represented by R or R' in the general formula (I) is a group represented by the general formula (a) or (b):

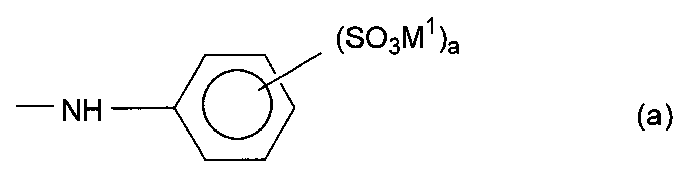

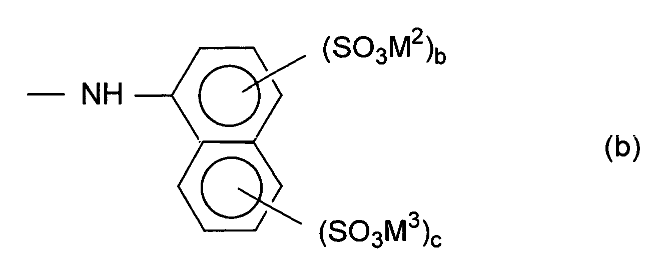

wherein M¹ to M³ are respectively a hydrogen atom or an alkali metal; a is an integer of 1 to 4; b is an integer of 1 to 3; and c is an integer of 1 to 4.

### EFFECT OF THE INVENTION

According to the present invention, there can be provided a crosslinking accelerator comprising a water-soluble triazine compound which can exhibit an excellent crosslinking promoting effect upon crosslinking an aqueous resin containing, in a molecule thereof, a group capable of being converted into an active hydrogen-containing group by the action of a proton, for example, a salt type carboxyl group-containing aqueous urethane-based resin or acrylic resin, with a crosslinking agent such as polycarbodiimide.

In addition, according to the present invention, there can be provided an industrially useful process for producing cured coating films having a sufficient strength for a short period of time using the above crosslinking accelerator upon production of the cured coating films by crosslinking the aqueous resin with aqueous polycarbodiimide, etc.

### DETAILED DESCRIPTION OF THE INVENTION

As the aqueous resins used in the process for production of the cured coating film according to the present invention, there may be used those aqueous resins containing, in a molecule thereof, a group capable of being converted into an active hydrogen-containing group by the action of a proton. Such aqueous resins specifically include various resins without any particular limitation as long as they are water-soluble or water dispersible resins containing, in a molecule thereof, a group capable of being converted into an active hydrogen-containing group by the action of a proton. Also, the groups capable of being converted into an active hydrogen-containing group by the action of a proton are not particularly limited, and include, for example, salt type carboxyl groups.

Examples of the salt type carboxyl groups include those carboxyl groups neutralized with volatile alkalis, for example, carboxyl groups of an ammonium salt type or carboxyl groups of a lower alkyl-containing primary, secondary or tertiary alkyl amine- or alcohol amine-added salt type. Examples of the alkyl amine or the alcohol amine constituting the carboxyl groups of an alkyl amine- or alcohol amine-added salt type, include mono-, di- or trimethylamine, mono-, di- or triethylamine, mono-, di- or tripropylamine, mono-, di- or triisopropylamine and mono-, di- or triethanolamine.

Specific examples of such aqueous resins include water-soluble or water-dispersible urethane-based resins, acrylic resins and polyester-based resins which contain the above salt type carboxyl group in a molecule thereof. Of these aqueous resins, preferred are the urethane-based resins and acrylic resins.

As the water-soluble or water-dispersible urethane-based resins containing the above salt type carboxyl group in a molecule thereof, there may be used, for example, such urethane-based resins which are produced by reacting a carboxyl-containing urethane-based prepolymer obtained from polyisocyanate compounds, carboxyl-containing polyols and/or amino acids, and polyols, with a basic organic compound and a chain extender in the presence of a solvent or water, removing the solvent or water from the resultant reaction solution under reduced pressure, and then subjecting the obtained product to neutralization treatment with ammonia, or the above alkyl amine or alcohol amine in the presence of water.

As the water-soluble or water-dispersible acrylic resins containing the above salt type carboxyl group in a molecule thereof, there may be used, for example, such acrylic resins which are produced by copolymerizing a polymerizable unsaturated carboxylic acid such as (meth)acrylic acid, itaconic acid, maleic acid, fumaric acid and crotonic acid, or an anhydride thereof, with (meth)acrylic esters such as methyl (meth)acrylate, ethyl (meth)acrylate, butyl (meth)acrylate, 2-ethylhexyl (meth)acrylate and 2-hydroxyethyl (meth)acrylate, acrylic monomers other than (meth)acrylic acid-based monomers such as (meth)acrylamide and (meth)acrylonitrile, and, if required, α-methyl styrene and vinyl acetate by a polymerization method such as emulsion polymerization, solution polymerization and bulk polymerization, and then subjecting the obtained product to neutralization treatment with ammonia, or the above alkyl amine or alkanol amine.

Also, as the water-soluble or water-dispersible polyester-based resins containing the above salt type carboxyl group in a molecule thereof, there may be used, for example, such polyester-based resins which are produced by conducting a selective mono-esterification reaction between glycol or hydroxy-terminated polyester glycol and tetracarboxylic dianhydride for chain-extension thereof, and then subjecting the obtained product to neutralization treatment with ammonia, or the above alkyl amine or alcohol amine.

The triazine compounds used as the crosslinking accelerator in the production process of the present invention are not particularly limited as long as these compounds can generate a proton when reacted with water, and exhibit a good water solubility. Examples of the triazine compounds include those compounds represented by the general formula (I): 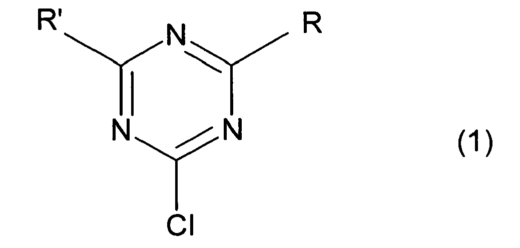
wherein R is a group containing a hydrophilic group; R' is a chlorine atom or a group containing a hydrophilic group.

In the general formula (I), the groups containing a hydrophilic group which are represented by R and R' are not particularly limited unless the groups inhibit the proton generation reaction due to hydrolysis of the triazine compound. Examples of the groups containing a hydrophilic group include ordinary hydrophilic groups, for example, those groups having a sulfonic acid group, a hydroxyl group, an amino group, a salt of these groups, or a group having a cyano group or an alkoxy group.

As the preferred triazine compounds, there may be used those compounds represented by the above general formula (I) wherein the groups having a hydrophilic group which are represented by R and R' are groups represented by the following general formula (a) or (b): 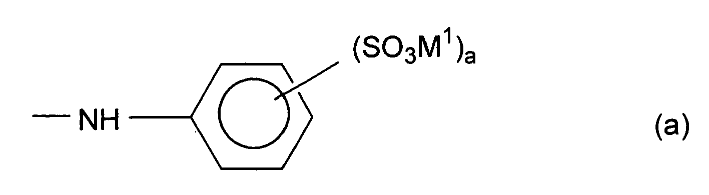 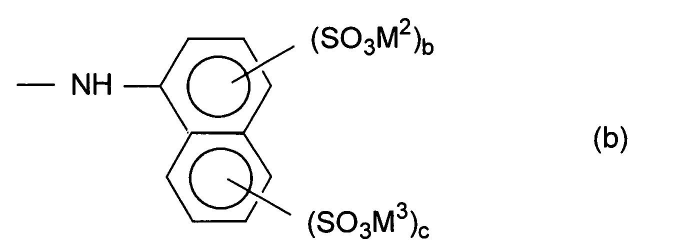
wherein M¹ to M³ are respectively a hydrogen atom or alkali metal; a is an integer of 1 to 4; b is an integer of 1 to 3; and c is an integer of 1 to 4.

In the above general formula (a) or (b), M¹ to M³ are respectively a hydrogen atom or alkali metal. Examples of the alkali metal include sodium, potassium and lithium. Of these alkali metals, preferred is sodium. In the general formula (a) or (b), the positions and number of the respective sulfonic acid salt groups may be determined so as to allow the triazine compound to exhibit a good water solubility.

For example, when the triazine compound represented by the general formula (I) wherein R' is a chlorine atom is heated in the presence of water, the triazine compound is first hydrolyzed as shown in the following reaction formula (II), thereby generating a proton. Next, when the hydrolyzed product is further heated, the hydrolyzed product is hydrolyzed at one more stage as shown in the reaction formula (III), thereby generating a proton. 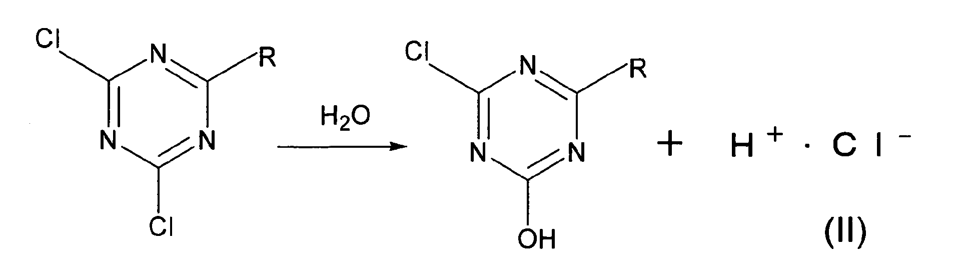 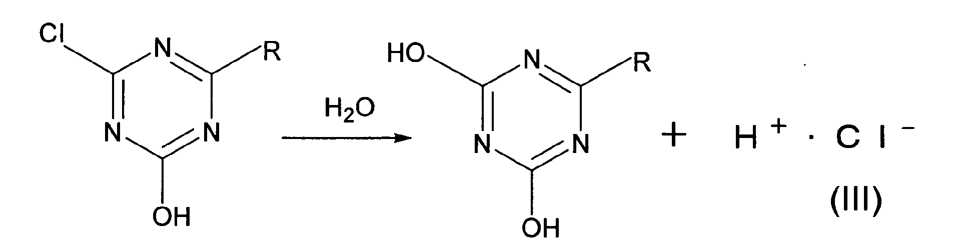
wherein R is the same as defined above.

Thus, the triazine compound generates the protons when reacted with water. Therefore, when the triazine compound is used in combination with the crosslinking agent upon crosslinking the aqueous resin containing, in a molecule thereof, a group capable of being converted into an active hydrogen-containing group by the action of a proton, the group capable of being converted into an active hydrogen-containing group which is contained in the aqueous resin can be rapidly converted into the active hydrogen-containing group by the action of the protons thus generated. Further, the thus produced active hydrogen-containing group is reacted with the crosslinking agent so that the aqueous resin can be crosslinked. As a result, the triazine compound exhibits a function as a crosslinking accelerator.

In the case where the group capable of being converted into an active hydrogen-containing group by the action of a proton which is contained in the aqueous resin is a salt type carboxyl group neutralized with a volatile alkali, for example, ammonia, or alkyl amine or alcohol amine, the salt type carboxyl group can be rapidly converted into a free carboxyl group by the action of the protons generated. Then, the carboxyl group thus formed is reacted with the crosslinking agent such as polycarbodiimide so that the aqueous resin is crosslinked. At this time, although ammonia, or alkyl amine or alcohol amine is by-produced, these by-products can be discharged out of the system upon heating because of volatility thereof.

In the case where the aqueous resin has the salt type carboxyl group and the crosslinking agent is polycarbodiimide, the hydrolysis temperature (crosslinking temperature) of the triazine compound is usually in the range of about 50 to 200°C and preferably 80 to 120°C. When forming the cured coating film, not only water as the solvent but also the by-products such as ammonia, alkyl amine and alcohol amine are volatilized in the above temperature range.

In the present invention, the amount of the triazine compound used is not particularly limited, and usually in the range of about 0.001 to 1 part by mass and preferably 0.001 to 0.3 part by mass on the basis of 100 parts by mass of a solid content of the aqueous resin in view of a good balance between crosslinking promoting effect, handling property and costs.

Also, the triazine compound is generally used in the form of an aqueous solution. The concentration of the aqueous triazine compound solution is not particularly limited, and usually in the range of about 0.01 to 50 mg/mL and preferably 0.1 to 20 mg/mL in view of a good handling property.

In the process for production of the cured coating film according to the present invention, when the aqueous resin containing in a molecule thereof a group capable of being converted into an active hydrogen-containing group by the action of a proton is crosslinked with the crosslinking agent reactive with active hydrogen in the active hydrogen-containing group to produce the cured coating film, the above triazine compound is used as the crosslinking accelerator.

More specifically, a coating solution in the form of an aqueous solution or an aqueous dispersion comprising (A) the aqueous resin containing, in a molecule thereof, a group capable of being converted into an active hydrogen-containing group by the action of a proton, (B) the crosslinking agent reactive with active hydrogen in the active hydrogen-containing group and (C) the crosslinking accelerator made of the above water-soluble triazine compound is first prepared, and then applied onto a substrate to form a coating layer thereon, followed by curing the coating layer under heating, thereby producing the cured coating film.

As the aqueous resin (A) containing, in a molecule thereof, a group capable of being converted into an active hydrogen-containing group by the action of a proton, there may be used the same resins as described above. Of these aqueous resins, preferred are water-soluble or water-dispersible urethane-based resins and acrylic resins which contain a salt type carboxyl group neutralized with volatile alkalis.

On the other hand, the crosslinking agent as the component (B) reactive with active hydrogen in the active hydrogen-containing group is not particularly limited. From standpoints of reactivity, stability, handing property and no toxicity, aqueous polycarbodiimide is suitably used as the crosslinking agent. The aqueous polycarbodiimide used as the crosslinking agent may be appropriately selected from conventionally known optional polycarbodiimides without any particular limitation.

Examples of such aqueous polycarbodiimides include those having an end hydrophilic group. The aqueous polycarbodiimide may be produced, for example, by first forming an isocyanate-terminated polycarbodiimide by condensation reaction of an organic diisocyanate compound with elimination of carbon dioxide, and then adding a hydrophilic segment containing a functional group reactive with an isocyanate group to the isocyanate-terminated polycarbodiimide.

Examples of the hydrophilic segment include those derived from the following hydrophilic organic compounds (1) to (4).
(1) Quaternary ammonium salts of dialkylamino alcohol represented by the formula:

   (R¹)₂-N-R²-OH

   wherein R¹ represents a lower alkyl group; and R² represents an alkylene group having 1 to 10 carbon atoms, or a polyoxyalkylene group.
   Of these quaternary ammonium salts of dialkylamino alcohol, especially preferred are quaternary ammonium salts of 2-dimethylamino ethanol. In the case where the above quaternary ammonium salts of dialkylamino alcohol are used as the hydrophilic segment, an ionicity of the resultant polycarbodiimides is of a cation type.
(2) Quaternary ammonium salts of dialkylaminoalkyl amine represented by the formula:

   (R¹)₂-N-R²-NH₂

   wherein R¹ and R² are the same as defined above.
   Of these quaternary ammonium salts of dialkylaminoalkyl amine, especially preferred are quaternary ammonium salts of 3-dimethylamino-n-propyl amine. In the case where the above quaternary ammonium salts of dialkylaminoalkyl amine are used as the hydrophilic segment, an ionicity of the resultant polycarbodiimides is of a cation type.
(3) Alkylsulfonic acid salts having at least one reactive hydroxyl group which are represented by the formula:

   HO-R³-SO₃R⁴

   wherein R³ represents an alkylene group having 1 to 10 carbon atoms; and R⁴ represents an alkali metal.
   Of these alkylsulfonic acid salts, especially preferred is sodium hydroxypropanesulfonate. In the case where the above alkylsulfonic acid salts are used as the hydrophilic segment, an ionicity of the resultant polycarbodiimides is of an anion type.
(4) Alkoxy-end-sealed polyethyleneoxide represented by the formula:

   R⁵-O-(CH₂-CHR⁶-O-)ₘ-H

   wherein R⁵ represents an alkyl group having 1 to 4 carbon atoms; and R⁶ represents a hydrogen atom or a methyl group; and m is an integer of 4 to 30, or a mixture of the polyethyleneoxide and polypropyleneoxide.

Of these polyethyleneoxides and mixtures thereof, especially preferred are polyethyleneoxides end-sealed with a methoxy group or an ethoxy group. In the case where the above polyethyleneoxides or mixture thereof are used as the hydrophilic segment, an ionicity of the resultant polycarbodiimides is of a nonionic type.

Examples of the organic diisocyanate compounds used for forming the above isocyanate-terminated polycarbodiimide include aromatic diisocyanate compounds, aliphatic diisocyanate compounds, alicyclic diisocyanate compounds and mixtures thereof. Specific examples of the organic diisocyanate compounds include 1,5-naphthylene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate and tetramethylxylylene diisocyanate.

The condensation reaction of the above organic diisocyanate compound with elimination of carbon dioxide proceeds in the presence of a carbodiimidation catalyst. Examples of the carbodiimidation catalyst include phospholene oxides such as 1-phenyl-2-phospholene-1-oxide, 3-methyl-2-phospholene-1-oxide, 1-ethyl-2-phospholene-1-oxide, 3-methyl-1-phenyl-2-phospholene-1-oxide, and 3-phospholene isomers thereof. Of these carbodiimidation catalysts, 3-methyl-1-phenyl-2-phospholene-1-oxide is preferred from the standpoint of a good reactivity thereof. Meanwhile, the carbodiimidation catalyst may be used in a catalytically effective amount.

The temperature used in the condensation reaction of the organic diisocyanate compound is usually in the range of about 80 to 200°C. The degree of condensation of the organic diisocyanate compound is preferably in the range of about 1 to 10. When the condensation degree falls within the above-specified range, the resultant aqueous polycarbodiimide exhibits a good dispersibility in the aqueous resin upon mixing the aqueous polycarbodiimide therein.

The temperature used upon reacting the isocyanate-terminated polycarbodiimide with the hydrophilic organic compound for adding the hydrophilic segment to the polycarbodiimide, is usually in the range of 60 to 180°C and preferably 100 to 160°C.

Of the thus produced aqueous polycarbodiimides, preferred is aqueous dicyclohexylmethane carbodiimide. The aqueous dicyclohexylmethane carbodiimide may be produced by condensing 4,4'-dicyclohexylmethane diisocyanate in the presence of the carbodiimidation catalyst to obtain isocyanate-terminated dicyclohexylmethane carbodiimide, and then reacting the thus obtained isocyanate-terminated dicyclohexylmethane carbodiimide with an organic compound having at least one hydroxyl group reactive with an isocyanate group.

Also, as the crosslinking accelerator made of the water-soluble triazine compound as the component (C), there may be used the same crosslinking accelerators as described above.

In the process for production of the cured coating film according to the present invention, the aqueous polycarbodiimides which are suitably used as the crosslinking agent (B) may be used singly or in the combination of any two or more thereof. The amount of the aqueous polycarbodiimide used is preferably in the range of 0.5 to 15 parts by mass and more preferably 1 to 10 parts by mass in terms of a solid content thereof on the basis of 100 parts by mass of a solid content of the aqueous resin as the component (A) in view of a good balance between properties of the obtained cured coating film and economical production thereof.

On the other hand, the above crosslinking accelerators made of the water-soluble triazine compound as the component (C) may also be used singly or in the combination of any two or more thereof. The amount of the crosslinking accelerator used is usually in the range of about 0.001 to 1 part by mass and preferably 0.001 to 0.3 part by mass on the basis of 100 parts by mass of a solid content of the aqueous resin as the component (A) in view of a good balance between crosslinking promoting effect, handling property and costs.

Next, the preferred embodiments of the process for producing the cured coating film according to the present invention are described.

In the process of the present invention, although the order of addition of the respective components is not particularly limited, the following two embodiments are preferably used. In the first preferred embodiment, an aqueous solution or an aqueous dispersion containing the aqueous resin as the component (A), an aqueous solution or an aqueous dispersion containing the crosslinking agent, preferably aqueous polycarbodiimide, as the component (B), and an aqueous solution containing the crosslinking accelerator made of the water-soluble triazine compound as the component (C), are mixed with each other to prepare a coating solution, and then the thus prepared coating solution is applied onto a substrate to form a coating layer thereon, followed by curing the coating layer under heating.

In the first preferred embodiment, the concentration of resins contained in the aqueous solution or aqueous dispersion containing the aqueous resin as the component (A) is not particularly limited, and preferably in the range of about 15 to 50% by mass and more preferably 20 to 40% by mass from the standpoints of a good coatability of the obtained coating solution and facilitated drying of the coating layer.

In the first preferred embodiment, the concentration of polycarbodiimide contained in the aqueous solution or aqueous dispersion containing the aqueous polycarbodiimide as the component (B) is not particularly limited, and preferably in the range of about 20 to 60% by mass and more preferably 30 to 50% by mass from the standpoints of a good handling property thereof, etc.

Also, the concentration of the aqueous solution containing the water-soluble triazine compound as the component (C) is not particularly limited, and preferably in the range of about 0.01 to 50 mg/mL and more preferably 0.1 to 20 mg/mL from the standpoints of a good handling property thereof, etc.

Thus, in the first preferred embodiment of the present invention, the components (A), (B) and (C) are mixed with each other to prepare a coating solution. In this case, the order of mixing of the components (A), (B) and (C) is not particularly limited.

The thus prepared coating solution is applied onto a suitable substrate to form a coating layer thereon, and then the coating layer is heated and cured to produce a cured coating film. Meanwhile, additive components added to the coating solution if desired, as well as the coating method and curing method are explained in detail later.

Next, the second preferred embodiment of the present invention is described. In the second preferred embodiment, there is provided the process for production of the cured coating film which comprises the steps of previously mixing the aqueous solution or aqueous dispersion containing the aqueous polycarbodiimide as the component (B) and the aqueous solution containing the water-soluble triazine compound as the component (C) with each other to prepare a mixed solution; mixing the thus prepared mixed solution with the aqueous solution or aqueous dispersion containing the aqueous resin as the component (A) to prepare a coating solution; and then applying the thus prepared coating solution onto a substrate to form a coating layer thereon, followed by curing the coating layer under heating.

Thus, in the second preferred embodiment of the present invention, first, the aqueous solution or aqueous dispersion containing the aqueous polycarbodiimide as the component (B) and the aqueous solution containing the water-soluble triazine compound as the component (C) which are explained in the first preferred embodiment are previously mixed with each other to prepare a mixed solution in which the crosslinking agent coexists together with the crosslinking accelerator.

Then, the thus prepared mixed solution is mixed with the aqueous solution or aqueous dispersion containing the aqueous resin as the component (A) which is explained in the first embodiment to prepare a coating solution. The thus prepared coating solution is applied onto a suitable substrate to form a coating layer thereon, and then the coating layer is heated and cured to thereby produce the aimed cured coating film.

The coating solution prepared in the first and second preferred embodiments of the present invention may optionally contain various additives such as pigments, fillers, leveling agents, surfactants, dispersants, plasticizers, ultraviolet light absorbers and antioxidants according to requirements.

Also, the coating solution may be applied onto the suitable substrate for forming the coating layer thereon by conventionally known methods such as brushing, padding, spray coating, hot spray coating, airless spray coating, roller coating, curtain-flow coating, cast coating, dip coating and knife edge coating.

Further, the curing treatment may be usually performed by the method of heat-treating the coating film in order to promote a crosslinking reaction thereof. The heat-treating method is not particularly limited, and the heat treatment may be performed, for example, by the methods using an electric heating oven, a hot air heating oven, an infrared ray heating oven, a high-frequency heating oven, etc.

The heating temperature is usually in the range of about 50 to 200°C and preferably 80 to 120°C.

In the process for production of the cured coating film according to the present invention, upon producing the cured coating film by crosslinking the aqueous resin containing in a molecule thereof, a group capable of being converted into an active hydrogen-containing group by the action of a proton, with the crosslinking agent reactive with active hydrogen in the active hydrogen-containing group, the water-soluble triazine compound is used as a crosslinking accelerator. As a result, at least one or whole of the following effects can be achieved.
(1) The cured coating film having a sufficient strength can be produced for a shorter treating time than conventionally.
(2) The strength of the obtained cured coating film becomes more higher if the same treating time as conventionally is used.
(3) The process requires no complicated procedures, and can be completed only by adding desired materials to the aqueous resin similarly to the conventional processes.
(4) Only by adding the crosslinking accelerator to the aqueous polycarbodiimide solution, the resultant curing system can be handled similarly to the conventional two-part systems.
(5) Since the amount of the crosslinking accelerator added is very small, reduction in concentrations of the polycarbodiimide and aqueous resin in the resultant coating solution are substantially prevented.

### EXAMPLES

The present invention is described in more detail by referring to the following examples. However, it should be noted that the following examples are only illustrative and not intended to limit the invention thereto.

### PRODUCTION EXAMPLE 1

Five hundred seventy eight grams of 4,4'-dicyclohexylmethane diisocyanate was reacted in the presence of 2.9 g of 3-methyl-1-phenyl-2-phospholene-1-oxide as a carbodiimidation catalyst at 180°C for 18 h to obtain isocyanate-terminated dicyclohexylmethane carbodiimide having a polymerization degree of 6.3 to 6.9. Next, 333.0 g of polyethyleneoxide monomethyl ether having a polymerization degree of 8 was added to the thus obtained isocyanate-terminated dicyclohexylmethane carbodiimide to conduct the reaction therebetween at 150°C for 5 h. After completion of the reaction, the obtained reaction solution was cooled to 50°C, and then 1478 g of distilled water was gradually added thereto, thereby obtaining a light-yellow transparent carbodiimide solution (concentration: 40% by mass; NCN group equivalent: 385).

### EXAMPLE 1: Production of Crosslinking Accelerator A

Into 400 mL of acetone previously heated was dissolved 184.5 (1 mol) g of cyanuric chloride. The resultant solution was poured into 600 mL of ice-cooled water to obtain a slurry containing fine particles. While maintaining the thus obtained slurry at a temperature of 0 to 5°C, 231 g (1 mol) of sodium sulfanilate dihydrate and 40 g (1 mol) of sodium hydroxide were added thereto, and the resultant mixture was stirred for about one hour. The obtained solid was separated by filtration, washed with cooled water, and then dried in a desiccator, thereby producing 343 g of a crosslinking accelerator A made of a water-soluble triazine compound represented by the above general formula (I) wherein R is represented by the general formula (a) (M = Na) at a yield of about 100%.

### EXAMPLE 2: Production of Crosslinking Accelerator B

The same procedure as in EXAMPLE 1 was repeated except for using 427 g (1 mol) of disodium 8-amino-1,3,6-naphthalenetrisulfonate instead of sodium sulfanilate dihydrate, thereby producing 415 g of a crosslinking accelerator B made of a water-soluble triazine compound represented by the above general formula (I) wherein R is represented by the general formula (b) (M = Na) at a yield of 72%.

### EXAMPLE 3

The crosslinking accelerator A obtained in EXAMPLE 1 was dissolved in distilled water, thereby preparing an aqueous solution A-1 containing 20 mg/mL of the crosslinking accelerator A and an aqueous solution A-2 containing 0.2 mg/mL of the crosslinking accelerator A.

One gram of a blue pigment "DYE PYROXIDE BLUE #3490(E)" available from Dainichiseika Kogyo Co., Ltd., was dispersed in 100 g of an aqueous urethane resin "Neo Rez R-960" (solid content: 33% by mass; acid value: 80 mg KOH/g) available from Avecia Limited. Meanwhile, the blue pigment was added for the purpose of facilitating the observation of change in conditions upon the subsequent rubbing test. Four grams of the thus obtained solution was mixed with 0.165 g of the carbodiimide solution (concentration: 40% by mass; NCN group equivalent: 385) produced in PRODUCTION EXAMPLE 1 and 0.1 mL of the aqueous crosslinking accelerator solution A-1 or A-2, and the resultant mixed solution was intimately stirred, thereby preparing a coating solution.

Next, the resultant coating solution was applied onto a polyethylene terephthalate (PET) film using a 100 µm-pitch bar coater to form a coating film thereon. The thus coated PET film was heated in a dryer at 120°C for 10 min. After 10 min, the film was taken out of the dryer and then naturally cooled in atmospheric air to room temperature. The surface of the resultant coating film was rubbed by an about 1 cm-square four-folded absorbent cotton impregnated with three droplets of methyl ethyl ketone while applying a predetermined pressing force thereto. The rubbing operation was repeated until the coating film was peeled off from the PET film substrate, and the number of times of the rubbing operation required was recorded.

The rubbing test was conducted three times to obtain an average value of the numbers of times of the rubbing operation. The results are shown in Table 1.

### EXAMPLE 4

The crosslinking accelerator B obtained in EXAMPLE 2 was dissolved in distilled water, thereby preparing an aqueous solution B-1 containing 20 mg/mL of the crosslinking accelerator B and an aqueous solution B-2 containing 0.2 mg/mL of the crosslinking accelerator B.

Then, the same procedure as in EXAMPLE 3 was repeated except for using the aqueous crosslinking accelerator solution B-1 and B-2 instead of the aqueous crosslinking accelerator solution A-1 and A-2, respectively. The results are shown in Table 1.

### COMPARATIVE EXAMPLE 1

The same procedure as in EXAMPLE 3 was repeated except that no aqueous crosslinking accelerator solution was used upon preparation of the coating solution. The results are shown in Table 1.

**TABLE 1**

| | Aqueous crosslinking accelerator solution | Number of times of rubbing operation |
|---|---|---|
| Example 3 | A-1 was added | 51.3 |
| | A-2 was added | 45.0 |
| Example 4 | B-1 was added | 43.3 |
| | B-2 was added | 49.7 |
| Comparative Example 1 | None | 39.7 |

| | | |
|---|---|---|
| Note A-1: Aqueous solution containing 20 mg/mL of crosslinking accelerator A; | | |
| A-2: Aqueous solution containing 0.2 mg/mL of crosslinking accelerator A; | | |
| B-1: Aqueous solution containing 20 mg/mL of crosslinking accelerator B; and | | |
| B-2: Aqueous solution containing 0.2 mg/mL of crosslinking accelerator B. | | |

As is apparent from Table 1, it was confirmed that when using the coating solution to which the aqueous solution containing the crosslinking accelerator A or B made of the triazine compound was added, the resultant coating film was enhanced in solvent resistance and exhibited a high strength.

### EXAMPLE 5

The crosslinking accelerators A and B obtained in EXAMPLE 1 and 2, respectively, were dissolved in distilled water, thereby preparing an aqueous solution A-3 containing 2 mg/mL of the crosslinking accelerator A and an aqueous solution B-3 containing 2 mg/mL of the crosslinking accelerator B, respectively.

One gram of a blue pigment "DYE PYROXIDE BLUE #3490(E)" available from Dainichiseika Kogyo Co., Ltd., was dispersed in 100 g of an aqueous urethane resin "Neo Rez R-960" (solid content: 33% by mass; acid value: 80 mg KOH/g) available from Avecia Limited. Four grams of the thus obtained solution was mixed with 0.165 g of the carbodiimide solution (concentration: 40% by mass; NCN group equivalent: 385) produced in PRODUCTION EXAMPLE 1 and 0.1 mL of the aqueous crosslinking accelerator solution A-3 or B-3, and the resultant mixed solution was intimately stirred, thereby preparing a coating solution.

Next, the resultant coating solution was applied onto a polyethylene terephthalate (PET) film using a 100 µm-pitch bar coater to form a coating film thereon. The thus coated PET film was heated in a dryer at 120°C for a predetermined time. After the elapse of the predetermined time, the film was taken out of the dryer and then naturally cooled in atmospheric air to room temperature. Then, the resultant coating film was subjected to the rubbing test by the same method as in EXAMPLE 3. The results are shown in Table 2.

### COMPARATIVE EXAMPLE 2

The same procedure as in EXAMPLE 5 was repeated except that no aqueous crosslinking accelerator solution was used upon preparation of the coating solution. The results are shown in Table 2.

**TABLE 2**

| | Aqueous crosslinking accelerator solution | Number of times of rubbing operation | | | | | |
|---|---|---|---|---|---|---|---|
| | | 5 min | 10 min | 15 min | 20 min | 25 min | 30 min |
| Example 5 | A-3 was added | 35.7 | 49.0 | 85.7 | 79.0 | 79.0 | 75.0 |
| | B-3 was added | 42.7 | 56.3 | 81.7 | 82.0 | 86.7 | 91.0 |
| Comparative Example 2 | None | 28.7 | 38.7 | 52.0 | 53.7 | 50.7 | 59.7 |

| | | | | | | | |
|---|---|---|---|---|---|---|---|
| Note A-3: Aqueous solution containing 2 mg/mL of crosslinking accelerator A; and | | | | | | | |
| B-3: Aqueous solution containing 2 mg/mL of crosslinking accelerator B. | | | | | | | |
| The times (min) show the heat-treating time at 120°C. | | | | | | | |

As is apparent from Table 2, it was confirmed that when using the coating solution to which the aqueous solution of the crosslinking accelerator A or B made of the triazine compound was added, a coating film exhibiting a high strength was produced for a shorter period of time than that produced using the coating solution containing no crosslinking accelerator A or B.

In the process for production of a cured coating film according to the present invention, when an aqueous resin containing in a molecule thereof, a group capable of being converted into an active hydrogen-containing group by the action of a proton is crosslinked with polycarbodiimide, etc., to produce the cured coating film, a crosslinking accelerator capable of generating a proton upon reacting with water is used, thereby enabling the cured coating film having a sufficient strength to be produced for a short period of time. The process of the present invention as well as the cured coating film obtained by the process can be used in various application fields such as paints, inks, fiber treating agents, adhesives and coating agents.

## Claims

1. A process for producing a cured coating film, comprising:
crosslinking an aqueous resin containing in a molecule thereof, a group capable of being converted into an active hydrogen-containing group by the action of a proton, with a crosslinking agent reactive with active hydrogen in the active hydrogen-containing group in the presence of a crosslinking accelerator made of a water-soluble triazine compound capable of generating a proton upon reacting with water.

2. The process according to claim 1, wherein said water-soluble triazine compound capable of generating a proton upon reacting with water is a compound represented by the general formula (I): 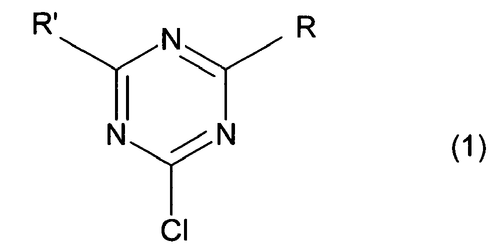
wherein R is a group containing a hydrophilic group; R' is a chlorine atom or a group containing a hydrophilic group.

3. The process according to claim 2, wherein said group containing a hydrophilic group which is represented by R or R' in the general formula (I) is a sulfonic acid group, a hydroxyl group, an amino group, a salt of these groups, or a group containing a cyano group or an alkoxy group.

4. The process according to claim 2 or 3, wherein said group containing a hydrophilic group which is represented by R or R' in the general formula (I) is a group represented by the general formula (a) or (b): 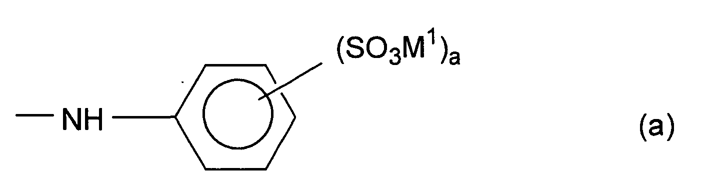 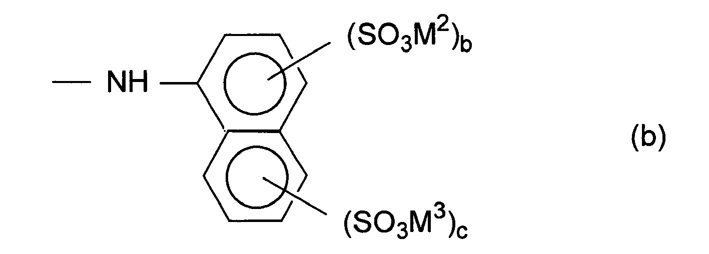
wherein M¹ to M³ are respectively a hydrogen atom or alkali metal; a is an integer of 1 to 4; b is an integer of 1 to 3; and c is an integer of 1 to 4.

5. The process according to any of claims 1 to 4, wherein said crosslinking accelerator is used in an amount of 0.001 to 1 part by mass on the basis of 100 parts by mass of a solid content of the aqueous resin.

6. The process according to any of claims 1 to 5, comprising:
preparing a coating solution in the form of an aqueous solution or an aqueous dispersion comprising (A) an aqueous resin containing, in a molecule thereof, a group capable of being converted into an active hydrogen-containing group by the action of a proton, (B) a crosslinking agent reactive with active hydrogen in the active hydrogen-containing group and (C) a crosslinking accelerator made of a water-soluble triazine compound capable of generating a proton upon reacting with water;
applying the coating solution onto a substrate to form a coating layer thereon; and
curing the coating layer under heating.

7. The process according to any of claims 1 to 6, wherein said aqueous resin containing, in a molecule thereof, a group capable of being converted into an active hydrogen-containing group by the action of a proton is a water-soluble or water-dispersible urethane-based resin or acrylic resin containing a salt-type carboxyl group.

8. The process according to any of claims 1 to 7, wherein said crosslinking agent reactive with active hydrogen in the active hydrogen-containing group is aqueous polycarbodiimide.

9. The process according to claim 8, wherein said aqueous polycarbodiimide is water-soluble or water-dispersible aqueous polycarbodiimide having an end hydrophilic group.

10. A crosslinking accelerator comprising a water-soluble triazine compound capable of generating a proton upon reacting with water, which compound is represented by the general formula (I): 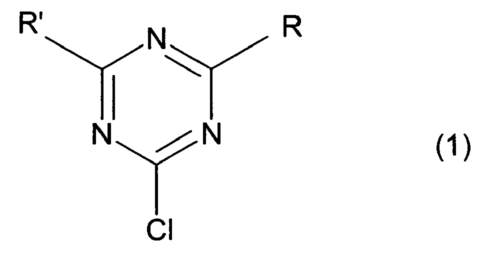
wherein R is a group containing a hydrophilic group; R' is a chlorine atom or a group containing a hydrophilic group,
said crosslinking accelerator being used for crosslinking an aqueous resin containing, in a molecule thereof, a group capable of being converted into an active hydrogen-containing group by the action of a proton.

11. The crosslinking accelerator according to claim 10, wherein said group containing a hydrophilic group which is represented by R or R' in the general formula (I) is a sulfonic acid group, a hydroxyl group, an amino group, a salt of these groups, or a group containing a cyano group or an alkoxy group.

12. The crosslinking accelerator according to claim 10 or 11, wherein said group containing a hydrophilic group which is represented by R or R' in the general formula (I) is a group represented by the general formula (a) or (b): 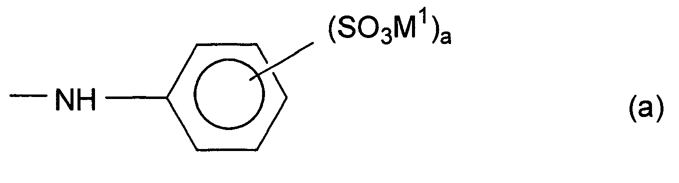 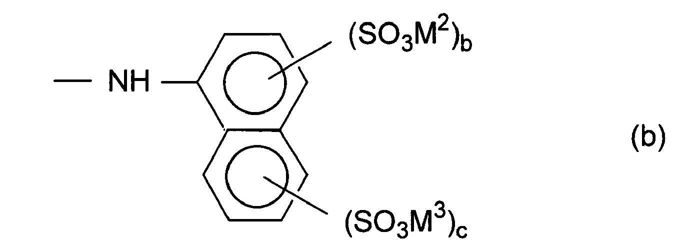
wherein M¹ to M³ are respectively a hydrogen atom or an alkali metal; a is an integer of 1 to 4; b is an integer of 1 to 3; and c is an integer of 1 to 4.
